# EUROPEAN PATENT APPLICATION

(11) **EP 1 950 912 A2**
(43) Date of publication of application: **30.07.2008**
(21) Application number: 07112847.4
(22) Date of filing: 20.07.2007
(51) Int. Cl.: H04L 12/26

(54) **Method, analyser, apparatus and computer readable medium for debugging networks**

(30) Priority: 10.08.2006 US 502042
(71) Applicant: NetHawk Oyj, 90570 Oulu (FI)
(72) Inventor: Sankala, Jouko, FI-90650, Oulu (FI)
(74) Representative: Brax, Matti Juhani

(57) **Abstract**

The invention relates to a method, measurement arrangement, analyser and analyser program for debugging transmission failures in a telecommunication network. In the method, the analyser utilizes both internal events of a telecommunication component and signalling messages transmitted in the telecommunication network. Internal events and external signalling messages are combined or correlated for speeding debugging.

## Description

### Technical field of the invention

The invention relates to a method for debugging telecommunication connections utilizing signalling messages and primitive messages. The invention also relates to an apparatus that is utilized in the method. The invention relates also to a computer program product implementing the method.

### Background of the invention

Monitoring of internal interfaces of a device gives important information about behaviour of the device. Overall picture of the behaviour of the device can be created by monitoring also external communication interfaces of the same device. When huge amount of data is collected by monitoring, the analysis and correlation of the data is laborious and is usually done only by post processing.

Patent application US 2005/0183066 discloses a correlating debugger for an electronic device. The correlator disclosed in the application collects data from a software analyser and hardware analyser which are connected to the device and creates from them time ordered set of data. The disclosure of the application is concentrated to depict how to correlate data of the hardware analyser and software analyser.

Patent US 6856942 discloses a method, system and computer program for management of enterprise wide applications. In the depicted method, data is collected from network, hardware and software components belonging to the enterprise application. The patent depicts sensors configured to collect data from different components of the application. It focuses on analysing computer programs and computer network. The document does not teach how to analyse traffic in a telecommunication network or calls in said telecommunication network.

On the other hand, a so-called protocol analyser is used for monitoring interfaces between elements of a telecommunication network. The analyser contains a set of tools for analysing messages transmitted between the network elements. The analyser can create from the retrieved messages for example a call and session trace.

One example of such an analyser is disclosed in a patent application PCT/FI2006/050030.

Usually a failure in an internal interface of an element of a telecommunication network leads to a failure, which can be detected from an external interface of said network element for example by a protocol analyser known in the art. Usually the observable failure appears in an interface leading from the internally failed element to another network element. The external failure can be detected for example from protocol signalling of calls and sessions. When such a failure happens, it appears as a failed call or session in a call and session trace window of the protocol analyser. After that, the collected data from all external interfaces can be presented in a protocol monitor window. A cause for the failure can be found by studying the collected data. It is possible to open and study the failure related data in the protocol monitor window for finding an actual cause of the network failure.

It is also possible that an internal failure of a telecommunication element effects to key performance indicators of the telecommunication system like call setup times etc. Those are also collected and shown in so-called Key Performance Indicator (KPI) window utilized in the protocol analyser. It is also possible that the internal failure effects to Quality of Service (QoS) parameters of the telecommunication system. The failure can for example increase jitter or decrease data rate. QoS parameters are usually analysed and shown in so-called QoS window in the protocol analyser.

Debugging could be easier if all of the failure data could be combined into a single view of the protocol analyser. However, in the prior art debugging systems log files providing feedback of telecommunication device behaviour and protocol analyser results are studied separately using separate programs and views. Therefore, a trouble-shooter must by himself combine or correlate data of the separate analyser programs during debugging.

Therefore, there exist a need for a method, apparatus and system for efficiently retrieving data from internal and external interfaces of an element of a telecommunication network which data can be used for speeding debugging work in a failure analysis.

### Summary of the invention

The aspect of the present invention is to provide a method, analyser, load tester, load test system and computer program product for debugging a failure in a telecommunication network caused by an internal failure of a telecommunication element. The debugging can be made either in real time or in post processing.

Monitoring of internal interfaces of a telecommunication network element gives important information about behaviour of said element. However, overall picture of behaviour of the telecommunication network element is got only by monitoring also external telecommunication interfaces of said element. According to one embodiment of the present invention, a device retrieves information from internal and external interfaces of the telecommunication network element and combines or correlates them. The correlated information concerning behaviour of the element can be directly utilized in debugging work that decreases a lot of the debugging time. It also makes it possible to do debugging in real time if needed.

In another advantageous embodiment of the invention, the method and device are utilized in a load test system. In a load test system both internal interfaces of the load test tester and utilized telecommunication interfaces between load tester and network element under test are monitored. Utilizing the invention a certain experiment belonging to a load test can be stopped immediately when a failure is detected by expert system during the experiment. The collected data can be studied to find the problem in test load test experiment. The test can directly go ahead to another experiment belonging to the same load test procedure without wasting time to continue the failed experiment.

The invention speeds up debugging by collecting all analysis results to a same system and combining or correlating the results. The analyser can make combination or correlation in real time and therefore results can be followed instantly. The results can be saved into a trace file where they can be reanalysed any time and studied in more or less details. The analyser provides also means for filtering the events and messages to be collected so the amount of data to be studied can be reduced effectively.

The aspects of the present invention are fulfilled by providing a method for combining or correlating messages with internal events retrieved from an internal interface of an element of a telecommunication network, the method comprising:
- retrieving messages from an interface of a telecommunication network;
- retrieving internal events from an internal interface of a telecommunication network element;
- saving them into a trace file;
- decoding the retrieved messages and internal events, and;
- processing them for debugging.

In addition, the aspects of the present invention are fulfilled by providing a telecommunication analyser comprising:
- a data transfer unit for retrieving
   - messages from an interface of a telecommunication network;
   - internal events from an internal interface of a telecommunication network element;
- a trace file for saving the messages and internal events;
- a decoder for decoding the messages and internal events, and;
- an expert system to process them for debugging.

In addition, the aspects of the present invention are fulfilled by providing a load tester for an element of a telecommunication network comprising a connection to an input of a protocol analyser for conveying test sequence data to the protocol analyser for debugging the element under test.

In addition, the aspects of the present invention are fulfilled by providing a load test system of a telecommunication network element comprising:
- a load tester connected to a telecommunication network element for testing the telecommunication network element, and;
- a protocol analyser connected to:
   - an interface of the telecommunication network element for retrieving messages due to a load test, and ;
   - a test sequence output of the load tester for retrieving utilized test sequence data.

In addition, the aspects of the present invention are fulfilled by providing a computer program comprising:
- computer readable code means for retrieving messages from an interface of a telecommunication network;
- computer readable code means for retrieving internal events from an internal interface of a telecommunication network element;
- computer readable code means for saving them into a trace file;
- computer readable code means for decoding the retrieved messages and internal events, and;
- computer readable code means for processing them in debugging.

In addition, the aspects of the present invention are fulfilled by providing an apparatus comprising:
- means for retrieving messages from an interface of a telecommunication network;
- means for retrieving events from an internal interface of a telecommunication network element;
- means for saving them into a trace file;
- means for decoding the retrieved signalling messages and events; and,
- means for processing them for debugging.

Further scope of applicability of the present invention will become apparent from the detailed description given hereafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief description of the drawings

The present invention will become more fully understood from the detailed description given herein below and accompanying drawings which are given by way of illustration only, and thus are not limitative of the present invention and wherein
- Fig. 1: shows a schematical representation of the invention;
- Fig. 2a: shows as example main functional parts of a protocol analyser according to the invention;
- Fig. 2b: shows as example main internals of a protocol analyser according to the invention;
- Fig. 3: shows an example of an analyser arrangement in a radio access network environment;
- Fig. 4: shows another example of an analyser arrangement in a radio access network environment;
- Fig. 5: shows an example of arrangement in a load testing system; and
- Fig. 6: shows as an exemplary flowchart main steps of the correlation method according to the invention.

### Detailed description

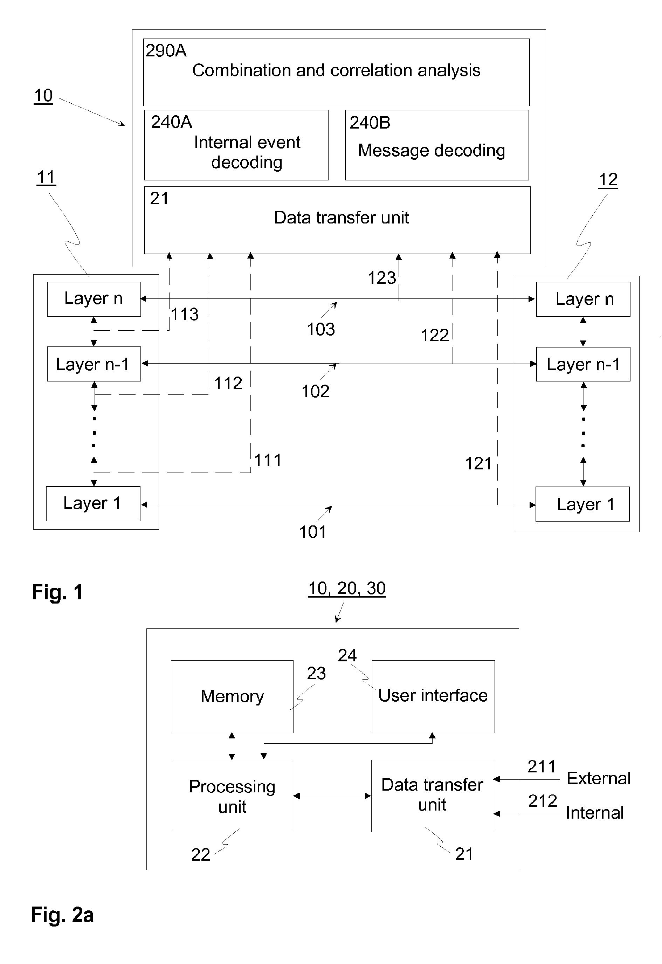

Figure 1 depicts schematically an exemplary telecommunication environment where the invention can be advantageously utilized. References 11 and 12 depict examples of two separate elements of a telecommunication system. Reference 10 depicts an analyser according to one exemplary embodiment of the invention.

Both telecommunication elements 11 and 12 of Fig. 1 comprise several interconnected functional layers or devices. In the example of Fig.1, the telecommunication system elements 11 and 12 comprise several exemplary layers: layer 1... layer n-1 and layer n. The layers can comprise distinct devices, software programs or combination of those. Two interconnected layers can change so-called primitives between each other. Internal events utilized in analysis contain these primitives and other useful data for instance debug logging data. Vertical double arrow lines between adjacent layers depict said primitive transmissions. An interconnection between two adjacent layers creates an internal interface of the telecommunication element, which is either a device interface or software interface.

The depicted exemplary telecommunication system elements 11 and 12 can change messages between each other. Horizontal double arrow lines 101, 102 and 103 depict said message transfer. Any depicted layer in one or the other telecommunication element, for example element 11, can create a message, which is transmitted for example to a corresponding layer of the other telecommunication element 12. As an example, reference 101 depicts an example of a message transmitted between layers 1 of the telecommunication elements 11 and 12. References 102 and 103 depict other examples of messages transmitted between higher-level layers in the exemplary telecommunication system. The transfer of said messages happens through so-called external interfaces between depicted telecommunication system elements 11 and 12. An external interface between the elements 11 and 12 can be either fixed or wireless.

The depicted telecommunication system can be analysed by an analyser 10 according one exemplary embodiment of the invention. The analyser 10 comprises advantageously a data transfer unit 21. In the example of Fig. 1, the analyser 10 is connected through the data transfer unit 21 to proper internal interfaces, which are located between functional layers in the telecommunication element 11. Dotted lines 111, 112 and 113 depict the connections from some internal interfaces of the telecommunication element 11 to the data transfer unit 21. Any proper primitive transmitted between two adjacent layers or other useful data can be fetched to the analyser 10 through these connections. Retrieved internal events are decoded in an internal event decoding block 240A of the analyser according to this exemplary embodiment of the invention.

The data transfer unit 21 of the analyser 10 comprises also means for connecting the analyser 10 to external interfaces located between the elements 11 and 12 of the exemplary telecommunication system. The connection to the external interface can be fixed or wireless or combination of those. References 121, 122 and 123 in the Fig. 1 show examples of these connections between the data transfer unit and external interfaces between telecommunication elements 11 and 12. Any proper message including both signalling messages and user data can be fetched to the analyser 10 using said connections 121, 122 or 123. The retrieved messages are advantageously decoded in a message decoding block 240B of the analyser 10.

In the analyser 10 according to one embodiment of the invention, internal event decoding results and message decoding results can advantageously be combined or correlated in a combination and correlation analysis block 290A. The invention speeds up debugging by collecting both internal events and messages to one system, decoding and correlating them. The combination and correlation analysis block 290A of the analyser 10 can correlate internal events and messages in real time. The results are advantageously saved into a trace file (not shown in Fig. 1). This makes it possible to post process them later on any time in more or less details if needed. The analyser 10 advantageously provides also means for filtering retrieved internal events and messages. By doing that, the amount of data, which has to be studied, can be reduced effectively.

Figure 2a illustrates an example of main functional components belonging to an analyser 20 according to an exemplary embodiment of the invention. The analyser 20 corresponds to the analyser 10 depicted in Fig. 1. The analyser 20 shown in Fig. 2a can be for instance a so-called protocol analyser used for measuring the operation of a data transmission system. It can also be a simulator or an interface card. The analyser 20 may also be a personal computer provided with for instance Windows® or some other operating system and dedicated protocol analysis software.

The analyser 20 comprises a processing unit 22. The processing unit 20 is a block controlling operation of the analyser 20. The block can be implemented as a processor including software, but different hardware implementations are also possible. For instance a circuit constructed of separate logic components or one or more application-specific integrated circuits (ASIC). A combination of the different implementations is also possible.

The analyser 10 comprises advantageously also a data transfer unit 21, which may include a transceiver and an antenna by which the analyser 20 receives and transmits signals. The data transfer unit 21 is configured to be connected to external interfaces of a telecommunication system, reference 211, for capturing messages from the telecommunication transmission system. The captured messages include both user data and signalling messages. Further, the data transfer unit 21 is configured to provide an interface for receiving internal events from an element of the telecommunication system or tester, reference 212. The data transfer unit 21 advantageously comprises further a time stamping unit (not shown in Fig. 2a) that adds time stamps to the captured data including messages and internal events. The time stamp system can be advantageously synchronized to a high accuracy clock, for example to a GPS time received from a GPS receiver (Global Positioning System) that is connected to the data transfer unit 21 (not shown in Fig. 2a).

The processing unit 22 handles processing of the captured data. The processing unit 22 comprises advantageously actual analyser software consisting of an input, decoding, and analysis and Ul subsystem software components, for example.

The analyser 20 may also comprise a user interface 24 that allows controlling the operations of the analyser 20 and monitoring the operations carried out by the analyser 20. The user interface 24 can comprise for example a display and a keyboard. Depending on the analyser the user interface 24 may comprise various other user interface parts.

The analyser 20 can also comprise a memory block 24 for saving captured data and analysis results.

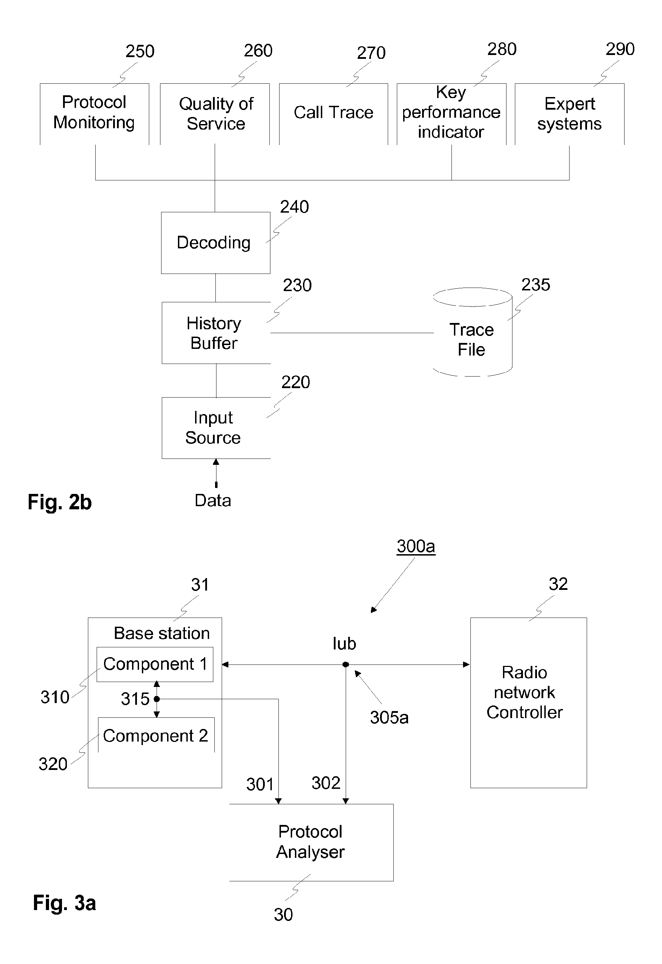

Figure 2b illustrates an example of an analyser internals, which are depicted for example in a Finnish patent application F120055239 of the present applicant. Captured and time stamped data is passed from data transfer unit (not shown in Fig. 2b) to related input source 220. From the input source 220 data is delivered to a History Buffer 230 that handles buffering and saving received data to a trace file 235. The History Buffer 230 delivers also data to a decoding stack 240 containing requisite decode layers for decoding the data.

From decode layers the decoded data can be delivered to several applications. They can include for example Protocol Monitoring (PM) 250 and Quality of Service application (QoS) 260 where QoS parameters can be calculated. The applications can include also Call Trace application (CT) 270 where call and session follow up and correlation with calls and sessions in other interfaces is accomplished. It can include also Key Performance Indicator application (KPI) 280 and an Expert System application (ES) 290 for analysing correlated data. KPI application is used to calculate for instance call setup time, call release times and call success rate. The Expert System 290 can subscribe results from other analysis applications, for example QoS 260, CT 270 and KPI 280 for more complete analysis. The Expert System 290 advantageously comprises an application, which functions as a combiner. It can further comprise an application, which functions as a correlator. The expert system uses combined or correlated data to make further decisions about ongoing traffic or test experiment. It may for instance use call setup time received from KPI application and data throughput rate received from QoS application to make decisions.

The internal events received from internal interfaces are advantageously formatted to a generic format allowing it to be handled by a generic decoder. This allows the analyser 10 easily to be connected to different kind of systems under test. Events can be formatted for example to a special XML format. Also a TLV (tag, length, value) format can be used for data.

In one advantageous embodiment of the invention an analysis system may contain multiple of above-depicted analysers 20 connected together utilizing resources and data from each other. One possible implementation of said system is disclosed in European patent application EP 06110186 of the present applicants Fig. 3a depicts an example of a data transmission system 300a where an embodiment of the invention can be applied. The exemplary data transmission system 300a can be based for instance on GSM (Global System for Mobile Communication), WCDMA (Wideband Code Division Multiple Access) or CDMA (Code Division Multiple Access) technology. The data transmission system 300a in Fig. 3a can correspond for instance to a radio access network (RAN) of a 3G WCDMA system.

The exemplary radio access network 300a of Fig. 3a comprises one radio network controller 32 which controls one base station 31.

An exemplary protocol analyser 30 can communicate with the data transmission system 300a using either fixed cable connections, GSM/GPRS/EDGE connections or for example short-range wireless connections such as Bluetooth, infrared or WLAN (Wireless Local Area Network) connections. A connection 302 between the protocol analyser 30 and the data transmission system 300a can be connected for instance to one or more fixed lines between data transmission system elements 31 and 32.

In an exemplary arrangement of Fig. 3a, the protocol analyser 30 is connected to a so-called lub interface 305a between the base station 31 and radio network controller 32. The protocol analyser 30 is also connected to an exemplary internal interface point 315 between internal components 310 and 320 of the base station 31. Therefrom the protocol analyser 30 can retrieve internal events from the interface 315.

Internal events from the interface 315 can be captured by a program running in the base station 31. Captured data can be retrieved for example via a TCP/IP connection 301 to the protocol analyser 30.

In the exemplary arrangement of Fig. 3a the protocol analyser 30 can receive signalling messages and user data from the external telecom interface 305a and also internal events from the internal interface 315. Therefore, the protocol analyser 30 can show messages originating from both interfaces. If needed they can be shown in one and same monitoring window so that effects of external telecommunication between telecommunication elements 31 and 32 and internal events of one telecommunication element 31 can be seen and analysed easily.

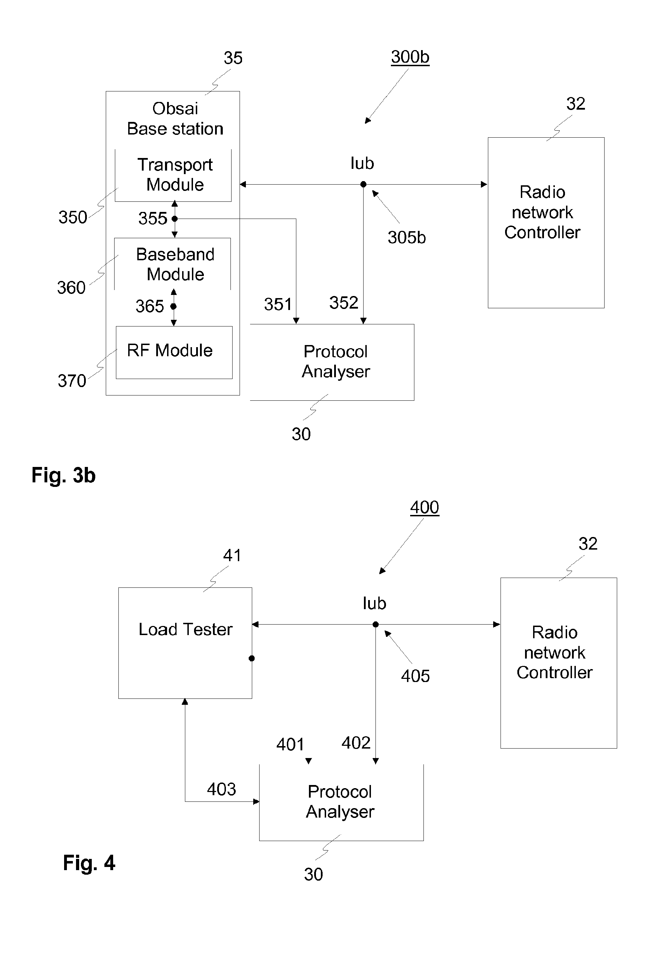

Fig. 3b depicts a second example of the invention which depicts a data transmission system 300b where an embodiment of the invention can be applied. In the exemplary arrangement of Fig. 3b a protocol monitor 30 is utilized to monitor internal electrical or optical interfaces 355 and 365 of a device 35 and an external telecom interface 305b of the same device.

In the example of Fig. 3b the analyser 30 is connected to an internal test point 355 of the device under test and to external telecom interface 305b of the same device. In the example of Fig. 3b the device under test is a base station 35 conforming obsai (open bts initiative) base station architecture. The exemplary base station 35 is connected to an exemplary radio network controller 32. The base station 35 of Fig. 3b comprises an RF module 370, baseband module 360 and transport module 350. An internal test point 365 exists between RF module 370 and baseband module 360. Another test point 355 exists between baseband module 360 and transport module 350.

Between the base station 35 and radio network controller 32 exist an lub interface 305b. In the example of Fig. 3b the protocol analyser 30 provides data transfer unit suitable for connecting for example to the internal test point 355. The protocol analyser 30 can decode data captured from the internal interface 355.

In the arrangement of Fig. 3b the protocol analyser 30 can receive data from both the external telecommunication interface 305b and the internal interface 355; references 352 and 351 in Fig. 3b. Therefore, it can show messages from both interfaces in a monitoring window. In the protocol analyser internal events of the base station 35 can be correlated with messages transmitted between base station 35 and radio network controller 32. Correlation between them can be further analysed in a monitoring window.

Fig. 4 depicts an embodiment of the invention where it is advantageously utilized in a testing environment 400 for testing of a telecommunication device 32. In this embodiment of the invention, a load tester 41 works together with a protocol analyser 30. This embodiment is suitable for example in so-called load testing where lot of data is handled.

In the prior art it has been difficult to study errors for example in test scripts because the log files, where the internal events of the device under test are printed, are huge in load testing situations. When the internal events are send to the protocol analyser 30 and correlated automatically with corresponding telecom signalling, it is much easier to pin point errors in test scripts.

For example, failed calls can be easily found by the call trace function of the protocol analyser. After that, combined messages from both internal and external interfaces are shown in monitoring window of the protocol analyser 30. The correlation of internal events to external signalling messages can be done by comparing signalling messages and internal events, which have same or near the same time stamps. The protocol analyser 30 can also follow up internal test event sequences of the telecommunication element and correlate said sequences with external telecom signalling using internal event and telecom signalling contents analysis.

In an exemplary arrangement 400 shown in Fig. 4 the protocol analyser 30 is connected to a load tester 41 and an interface 405 between the load tester 41 and a device under test. The device under test is an exemplary radio network controller 32. Internal events from the load tester 41 are delivered for example via a TCP/lP connection 401 to the protocol analyser 30. Data from an external interface, for example an lub interface 405, is captured to the protocol analyser 30 advantageously by using a wire tap 402.

Therefore, in the arrangement of Fig. 4 the protocol analyser 30 can receive data from the external telecommunication interface 405 and from the load tester 41. The protocol analyser 30 can for instance show messages from both sources in a monitoring window. Influences of internal events of the load tester 41 can be correlated with telecommunication signalling and further be analysed in a monitoring window of the protocol analyser 30.

The protocol analyser 30 can also provide control and feedback through an optional interface 403 to the load tester 41. Via the feedback interface 403, the load tester 41 can for example get information concerning call success rate from the protocol analyser 30. Based on that information the load tester 41 can tune testing according to the feedback data. It can for example increase or decrease call rate.

Via the control interface 403 it is also possible for the load tester 41 to command the protocol analyser 30 to start or stop recording, for example.

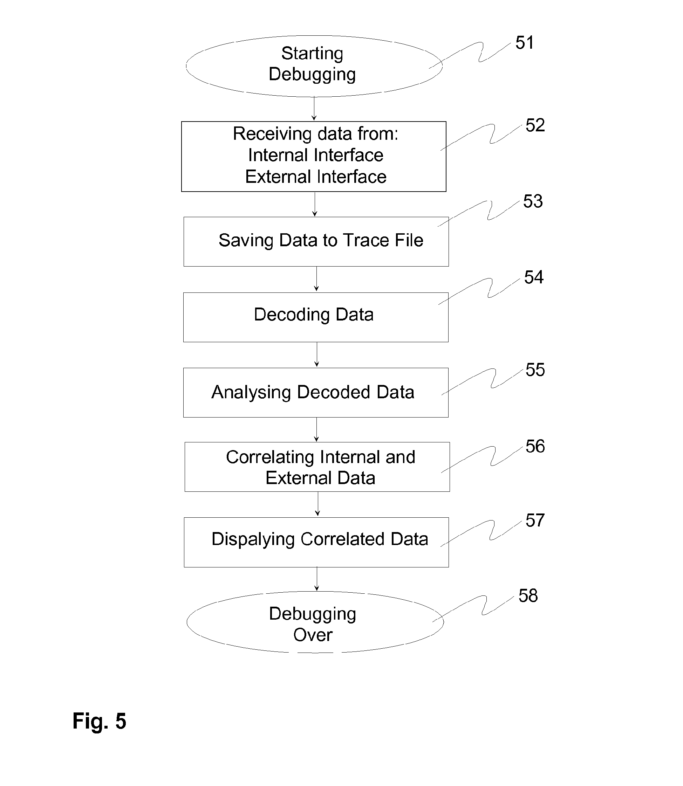

The main steps of the method according to the invention are shown as an exemplary flow chart in Fig. 5. The debugging process starts in phase 51. In phase 52 the analyzer retrieves data at least from two different data sources. Signaling messages and user data can be captured from an external interface which is located between two network elements belonging to telecommunication system. The other data source lies inside one distinct telecommunication element. Internal events, which relates to a certain service primitive or debug logging data, can be captured from said internal interface to the protocol analyzer. Advantageously all retrieved data can be saved in so-called Trace File.

Before analyzing the captured data it is decoded in phase 54.
The decoded data can be delivered for specific analysis to several applications in phase 55. The analysis can comprise for example a Protocol Monitoring application where captured telecommunication data is utilized for finding calls and sessions and internal events. The analysis can also comprise a Quality of Service application (QoS) for calculating QoS parameters. Further, it can comprise a Call Trace application where call and session follow up and correlation with calls and sessions in other interfaces is accomplished. It can include also Key Performance Indicator application for calculating key performance parameters.

In phase 56 an Expert System application can be utilized for processing data, which has been earlier analysed by other applications, more detailed in phase 55. The Expert System application advantageously subscribes analysis results from other applications for example from QoS application, CT application and KPI 280 to complete analysis. The processing of data can comprise combination or correlation of retrieved messages or signals. Combination and correlation can be done for example by utilizing time stamps attached to retrieved data.

In phase 57 combined and/or correlated data can be displayed in time order. Data to be displayed can comprise for example calls and session in a call trace window, QoS metrics in a QoS window and KPI parameters in a KPI window. This can be accomplished either in real time or in post processing. Correlation results of the Expert System can boost debugging work. The debugging process ends in phase 58.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A debugging method comprising:
- retrieving messages from an interface of a telecommunication network;
- retrieving internal events from an internal interface of a telecommunication network element;
- saving them into a trace file;
- decoding the retrieved messages and internal events, and;
- processing them for debugging.

2. The method according to claim 1 wherein said processing further comprises combination of the decoded messages and internal events.

3. The method according to claim 1 wherein said processing further comprises correlation of the protocol decoded messages and internal events.

4. The method according to claim 1 wherein said processing further comprises at least one of the following: analysing quality of service, analysing calls or analysing key performance indicators.

5. The method according to claims 2, 3 or 4 wherein said processing further comprises expert system for further decisions about analysed data containing QoS, KPI, call and correlation and combination results.

6. A telecommunication analyser comprising:
- a data transfer unit for retrieving
- messages from an interface of a telecommunication network;
- internal events from an internal interface of a telecommunication network element;
- a trace file for saving the messages and internal events;
- a decoder for decoding the messages and internal events, and;
- an expert system to process them for debugging.

7. The analyser according to claim 6 where the expert system comprises:
- protocol data unit (PDU) analyser for processing the retrieved messages, and;
- service primitive analyser for processing the retrieved internal events.

8. The analyser according to claim 7 where the expert system further comprises a combiner for combining the retrieved signalling messages and internal events.

9. The analyser according to claim 7 where the expert system further comprises a correlator for correlating the retrieved signalling messages and internal events.

10. The analyser according to claim 8 or 9 where the analyser further comprises a display for displaying combination results.

11. The analyser according to claim 8 or 9 where the analyser further comprises a display for displaying correlation results.

12. A telecommunication load tester comprising a connection to an input of a protocol analyser for conveying test sequence data to the protocol analyser for debugging a device under test.

13. The load tester according to claim 12 where the load tester further comprises a second connection to the protocol analyser for exchanging feedback information with the protocol analyser.

14. A load test system comprising:
- a load tester connected to a telecommunication network element for testing the telecommunication network element, and;
- a protocol analyser connected to:
- an interface of the telecommunication network element for retrieving messages due to a load test, and ;
- a test sequence output of the load tester for retrieving utilized test sequence data.

15. The load test system according to claim 14 where the load tester is connected to the protocol analyser also with a bidirectional feedback connection.

16. The load test system according to claim 15 where the load tester gives to the protocol analyser a command to start or stop recording through the feedback connection.

17. The load test system according to claim 15 where the protocol analyser transmits information of call success rate to the load tester through the feedback connection.

18. A computer-readable medium having computer-executable components, comprising:
- computer readable code means for retrieving messages from an interface of a telecommunication network;
- computer readable code means for retrieving internal events from an internal interface of a telecommunication network element;
- computer readable code means for saving them into a trace file;
- computer readable code means for decoding the retrieved messages and internal events, and;
- computer readable code means for processing them in debugging.

19. The computer-readable medium having computer-executable components according to claim 18 where computer readable code means for debugging comprises:
- computer readable code means for executing message decoding, and;
- computer readable code means for executing decoding of the retrieved internal events.

20. The computer-readable medium having computer-executable components according to claim 19 where computer readable code means for debugging further comprises:
- computer readable code means for combining decoding results of the messages and internal events; and
- computer readable code means for correlating results of the decoding of the messages and internal events.

21. An apparatus comprising:
- means for retrieving messages from an interface of a telecommunication network;
- means for retrieving events from an internal interface of a telecommunication network element;
- means for saving them into a trace file;
- means for decoding the retrieved signalling messages and events; and,
- means for processing them for debugging.
